# DEMANDE DE BREVET EUROPEEN

(11) **EP 4 763 379 A1**
(43) Date de publication de la demande: **24.06.2026**
(21) Numéro de dépôt: 24220489.9
(22) Date de dépôt: 17.12.2024
(51) Int. Cl.: B22F 10/18, C04B 35/00, G04B 45/00, G04B 37/22, B22F 3/04, B22F 3/10, B22F 3/22, B22F 3/105

(54) **PROCÉDÉ DE FABRICATION D'UN COMPOSANT HORLOGER OU DE BIJOUTERIE ET COMPOSANT OBTENU PAR UN TEL PROCÉDÉ**

(71) Demandeur: Manufacture d'Horlogerie Audemars Piguet SA, 1348 Le Brassus (CH)
(72) Inventeur: Le Loarer, Thibaut, 74270 Chavannaz (FR); Métailler, Vincent, 2300 La Chaux-de-Fonds (CH)
(74) Mandataire: P&TS SA (AG, Ltd.)

(57) **Abrégé**

L'invention concerne un procédé de fabrication d'un composant horloger ou de bijouterie fini ou semi-fini (100 ; 200), comprenant un matériau principal (M1) et un matériau secondaire différent (M2) noyé dans le matériau principal (M1) et en partie localisé en surface du composant (100 ; 200). Le procédé comporte les étapes suivantes:i) placer dans un moule (M) une poudre (Mp1) du matériau principal (M1) et au moins une préforme (P) d'un élément tridimensionnel préalablement réalisée à partir d'une poudre (Mp2) du matériau secondaire (M2) de sorte à ce que ladite au moins une préforme (P) soit intégralement noyée au sein de la poudre du matériau principal (M1); ii) réaliser une opération de frittage de la matière contenue dans le moule (M) afin d'obtenir une pastille frittée sans qu'aucun du matériau principal (M1) et du matériau secondaire (M2) n'entre en fusion, et iii) réaliser au moins une opération d'enlèvement de matière sur la pastille frittée de sorte à révéler en surface du composant (100; 200) une partie (S) de l'élément tridimensionnel constituée du matériau secondaire (M2), le reste dudit élément tridimensionnel étant intégré dans la masse dudit composant (100 ; 200) constitué du matériau principal (M1).

## Description

### Domaine technique

La présente invention concerne un procédé de fabrication d'un composant horloger fini ou semi-fini, notamment une carrure ou une lunette de montre, comprenant un matériau principal et au moins un autre matériau secondaire différent du matériau principal. Le matériau secondaire est partiellement noyé dans le matériau principal afin d'être localisé en surface du composant horloger. Le matériau secondaire peut présenter un caractère décoratif et/ou fonctionnel, par exemple à des fins d'authentification. Le procédé selon la présente invention est également adapté pour la fabrication d'un composant de bijouterie fini ou semi-fini, notamment un article de joaillerie. La présente invention concerne également un composant horloger ou de bijouterie obtenu par un tel procédé ainsi qu'une pièce d'horlogerie comportant un ou plusieurs composants horlogers obtenu selon ce procédé.

### Etat de la technique

Dans de domaine de l'horlogerie et de la bijouterie, la création de zones d'un matériau différent sur un composant constitué d'un matériau prépondérant est souvent réalisée uniquement en surface ou en « extrême surface » du composant, c'est-à-dire avec une profondeur limitée à quelques microns. Cela signifie que la modification est superficielle et que le matériau de ces zones ne pénètre pas en profondeur dans la matière. Par ailleurs, ces interventions sont effectuées sur des composants dont leur forme définitive est déjà obtenue. Cela rend la structure superficielle du composant plus vulnérable, notamment aux abrasions ou aux chocs, ce qui peut engendrer une usure prématurée. Par ailleurs, la restauration de la pièce qui nécessite le remplacement de la couche de surface, est difficile voire impossible.

Les procédés actuels destinés à modifier la pièce en surface mettent typiquement en oeuvre une opération de gravage suivie d'un remplissage de la gravure avec des matériaux tels que la laque, l'émail, la peinture ou une pâte visqueuse. Ils incluent également l'application de motifs par des techniques comme la peinture, la tampographie ou le décalque, ainsi que la coloration de surface au laser. Pour certains métaux comme l'aluminium ou le titane, des traitements spécifiques tels que l'anodisation ou l'éloxage sont utilisés. Des revêtements de type ALD, PVD, CVD suivi par des dissolutions localisées permettent également d'obtenir un motif en surface. Les modifications apportées aux pièces par ces procédés, qui agissent principalement en surface, ont l'inconvénient de présenter une résistance limitée à l'usure, notamment aux rayures qui peuvent enlever localement toute l'épaisseur de la couche laissant apparaître le matériau sous-jacent.

En raison de cette limitation de durabilité, ces techniques sont généralement appliquées aux composants internes, comme les éléments du mouvement ou les cadrans, qui sont mieux protégés de l'usure. À l'inverse, les pièces d'habillage, telles qu'un bracelet, une lunette, une carrure, un fond de boite de montre ou une couronne, qui sont plus exposées aux sollicitations externes, ne peuvent pas bénéficier de ces procédés, car cela pourrait compromettre leur résistance et leur esthétique à long terme.

### Bref résumé de l'invention

Un but de la présente invention est par conséquent de proposer un procédé de fabrication d'un composant horloger ou de bijouterie, fini ou semi-fini, exempt au moins en partie des limitations précitées.

Plus particulièrement, un but de la présente invention est de proposer un procédé de fabrication d'un composant horloger ou de bijouterie présentant en surface un ou plusieurs motifs possédant une résistance à l'usure améliorée.

Un autre but de la présente invention est de proposer un procédé de fabrication d'un composant horloger, notamment une platine ou un pont, possédant des zones ayant au moins une propriété fonctionnelle prépondérante par rapport aux propriétés du matériau principal du composant horloger.

L'un des objets de la présente invention vise à atteindre au moins l'un de ces buts par un procédé de fabrication d'un composant horloger ou de bijouterie fini ou semi-fini, comprenant un matériau principal et un matériau secondaire différent noyé dans le matériau principal et en partie localisé en surface dudit composant. Le procédé comporte les étapes suivantes : i) placer dans un moule une poudre du matériau principal et au moins une préforme d'un élément tridimensionnel préalablement réalisée à partir d'une poudre du matériau secondaire de sorte à ce que ladite au moins une préforme soit intégralement noyée au sein de la poudre du matériau principal ; ii) réaliser une opération de frittage de la matière contenue dans le moule afin d'obtenir une pastille frittée sans qu'aucun du matériau principal et du matériau secondaire n'entre en fusion, et iii) réaliser au moins une opération d'enlèvement de matière sur la pastille frittée de sorte à révéler en surface du composant une partie de l'élément tridimensionnel constituée du matériau secondaire, le reste dudit élément tridimensionnel étant intégré dans la masse dudit composant constitué du matériau principal.

Selon une forme de réalisation, l'opération d'enlèvement de matière est réalisée pour obtenir les dimensions finales du composant.

Selon une forme de réalisation, la partie de l'élément tridimensionnel, située en surface du composant, épouse le profil de la surface environnante dudit composant constitué du matériau principal.

Selon une forme de réalisation, la partie de l'élément tridimensionnel, située en surface dudit composant, représente une figure géométrique, un logo ou tout autre forme contrôlée.

Selon une forme de réalisation, ladite au moins une préforme est réalisée par un procédé de fabrication additive.

Selon une forme de réalisation, le procédé de fabrication additive est un procédé d'impression 3D par filament (Fused Déposition Modeling). Le filament comporte la poudre du matériau secondaire et un liant organique comprenant au moins un composé thermoplastique. Selon une alternative le procédé d'impression 3D est réalisé par stéréolithographie (SLA).

Selon une forme de réalisation, une étape de déliantage, au moins partielle, de la préforme (P) est réalisée avant l'étape i).

Selon une forme de réalisation, l'étape i) consiste à disposer dans le moule une première couche de la poudre du matériau principal avec une épaisseur comprise entre 0.5 et 10mm, de préférence comprise entre 1 et 4mm, puis à placer ladite au moins une préforme du motif tridimensionnel sur la première couche avant de disposer une seconde couche de la poudre du matériau principal avec une épaisseur comprise entre 0.5 et 10mm, de préférence comprise entre 1 et 5mm, afin d'entourer et de recouvrir intégralement la préforme par le matériau principal.

Selon une forme de réalisation, le matériau secondaire présente un aspect visuel qui se confond avec celui du matériau principal dans des conditions normales d'éclairage et un aspect visuel distinct de celui du matériau principal dans le noir ou sous un rayonnement ultraviolet.

Selon une forme de réalisation, la poudre du matériau secondaire est un mélange d'au moins un métal et d'au moins un matériau luminescent.

Selon une forme de réalisation, les poudres du matériau principal et secondaire comprennent chacune au moins un matériau ou une combinaison de matériaux parmi les matériaux céramiques et les matériaux métalliques de préférence précieux tels que ceux comprenant de l'or.

Selon une forme de réalisation, les poudres sont choisies de sorte que la différence de couleur entre le matériau principal et le matériau secondaire soit supérieure à un Delta E de 1 selon la norme CIEDE2000, de préférence supérieure à un Delta E de 2 ou de 3, afin d'avoir une distinction visuelle nette et perceptible entre les matériaux principal et secondaire.

Selon une forme de réalisation, la préforme du motif tridimensionnel est une structure comprenant des éléments distants les uns par rapport aux autres. Le matériau secondaire possède au moins une propriété fonctionnelle prépondérante par rapport aux propriétés du matériau principal. Par exemple, le matériau secondaire possède un module de Young inférieur au module de Young du matériau principal.

Un autre aspect de l'invention porte sur un composant horloger ou de bijouterie fini ou semi-fini obtenu par le procédé selon l'une des formes de réalisations susvisées.

Un autre aspect de l'invention porte sur un composant horloger fini ou semi-fini, notamment une platine ou un pont, obtenu par le procédé selon lequel le matériau secondaire possède au moins une propriété fonctionnelle prépondérante par rapport aux propriétés du matériau principal, par exemple un module de Young inférieur au module de Young du matériau principal. Le matériau secondaire comporte des zones de géométrie contrôlée et de préférence configurées pour la fixation de pivots.

Un autre aspect de l'invention porte sur une pièce d'horlogerie comportant un ou plusieurs composants horlogers obtenus par le procédé selon l'une des formes de réalisations susvisées.

### Brève description des figures

Des exemples de mises en oeuvre de l'invention sont indiqués dans la description illustrée par les figures annexées dans lesquelles :
- la figure 1 illustre schématiquement les principales étapes du procédé de fabrication pour une carrure de montre, selon une forme de réalisation,
- la figure 2 illustre schématiquement les principales étapes du procédé de fabrication pour une platine ou un pont, selon une autre forme de réalisation.

### Exemples de mode de réalisation de l'invention

La description qui suit s'attache à décrire un procédé de fabrication d'un composant horloger selon différentes formes de réalisation, comprenant un matériau principal et un matériau secondaire, de forme contrôlée, noyé dans le matériau principal et en partie localisé, notamment en surface du composant horloger. Le matériau secondaire présente une ou plusieurs caractéristiques ou propriétés distinctives par rapport au matériau principal, notamment en termes d'aspect visuel et/ou de propriétés fonctionnelles.

A titre d'exemple, les matériaux principal et secondaire peuvent être par exemple en Or rose « 5N » pour le matériau principal M1, et en Or gris pour le matériau secondaire afin que celui-ci permette de créer des formes contrôlées à la surface du composant horloger. L'aspect visuel de ces formes contrôlées diffère ainsi de l'aspect visuel prépondérant du matériau principal de composant horloger. Le matériau secondaire étant noyé dans la masse du matériau principal, les motifs crées par le matériau secondaire ne sont par conséquent pas ou peu impactés par l'usure de la pièce. Avantageusement, une opération telle qu'un polissage de la surface peut être entreprise ultérieurement et même à plusieurs reprises, dans le cas où il conviendrait par exemple de rétablir l'aspect d'origine d'une pièce quelque peu usée par le temps.

Le matériau principal peut être un alliage de titane alors que le matériau secondaire peut être une céramique présentant une luminescence, par exemple sous UV, conférant au composant horloger des propriétés optiques et physiques différentes.

L'une des particularités de ce procédé consiste à réaliser une préforme d'un motif tridimensionnel obtenue à partir d'une poudre du matériau secondaire dont la nature est choisie en fonction du but recherché qui peut être notamment d'ordre décoratif et/ou fonctionnel, par exemple à des fins d'authentification comme on le verra par la suite. La préforme du motif est noyée dans une poudre du matériau principal. La poudre est ensuite pré-compactée à l'aide par exemple d'une presse afin de former un échantillon manipulable de forme quelconque souhaitée.

Avantageusement, la préforme du motif tridimensionnel est réalisé par un procédé de fabrication additive, préférablement par impression par filament plus connu sous la dénomination de dépôt de fil fondu ou « Fused Déposition Modeling ». Le filament est typiquement constitué à partir de la poudre du matériau secondaire et d'un liant organique comprenant au moins un composé thermoplastique tel que décrit dans la publication WO20211859. Selon une alternative, la préforme du motif tridimensionnel est réalisé par un autre procédé de fabrication additive, notamment par stéréolithographie.

La fabrication additive dans le contexte de la présente demande a pour but de produire une préforme d'une figure géométrique quelconque, un logo ou tout autre forme contrôlée constituée du matériau secondaire.

Une préforme de forme contrôlée peut toutefois être obtenue par un autre procédé de fabrication en fonction de la nature de la composition du matériau secondaire notamment par « binder jetting », par compaction isostatique à froid ou CIP (Cold Isostatic Pressing), ou par moulage par injection.

Le procédé de fabrication additive ou les autres procédés de fabrication tels que ceux susvisés doivent permettre de produire une préforme du motif tridimensionnel qui soit, d'une part, suffisamment solide pour être manipulable, et d'autre part, adaptée pour subir une opération de frittage, en particulier de type SPS, selon le procédé tel que décrit ci-après, selon l'une quelconques des formes de réalisation. Cela permet d'obtenir un composant, par exemple horloger, dont le matériau secondaire, partiellement noyé dans le matériau principal et en partie localisé notamment en surface, possède une dureté souhaitée.

Avantageusement, l'opération de frittage SPS permet d'obtenir une pièce frittée d'une densité comprise entre 98 et 100%, préférentiellement entre 99% et 99,99%, préservant la finesse de la granularité des poudres, ce qui a pour avantage d'optimiser les propriétés mécaniques, notamment la dureté et la ténacité par rapport à un cycle de frittage conventionnel.

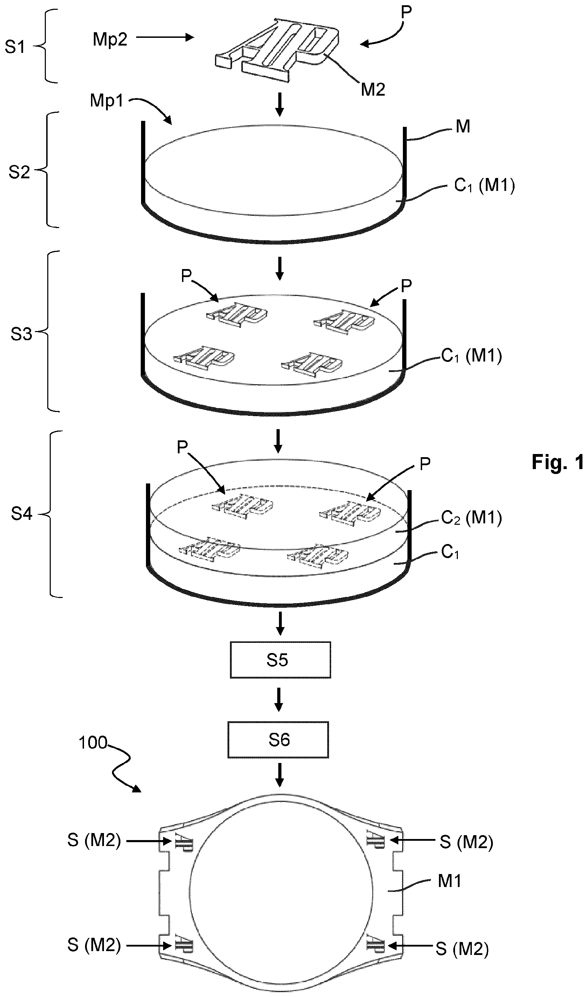

Selon une forme de réalisation et en référence à la figure 1, le procédé de fabrication est adapté pour la fabrication notamment d'une carrure de montre 100 parmi d'autres composants d'habillage d'une pièce d'horlogerie.

Le procédé comporte une première étape S1 consistant à réaliser, de préférence par fabrication additive selon la description susvisée, une ou plusieurs préformes P d'un motif tridimensionnel à partir d'une poudre Mp2 du matériau secondaire M2 constituant en partie la carrure 100. Comme évoqué précédemment, le motif tridimensionnel est typiquement un logo, une forme géométrique ou tout autre forme contrôlée, à savoir non aléatoire. Pour un composant horloger, notamment une carrure 100, intégrant plusieurs préformes P celles-ci peuvent être identiques ou différer les unes par rapport aux autres par leur composition et leur forme respective.

Le procédé comporte une seconde étape S2 consistant à disposer dans le fond d'un moule ou d'une matrice M, typiquement en graphite, une première couche C, d'une poudre Mp1 du matériau principal M1 constituant de manière prépondérante le composant horloger 10. La taille du moule M dépend du type du composant horloger à fabriquer et est typiquement de l'ordre de 80mm de diamètre pour la fabrication d'une carrure de montre ou de l'ordre de 50mm de diamètre pour la fabrication d'une lunette de montre.

La première couche C, est disposée de sorte à avoir une épaisseur, après avoir été pré-compactée, comprise dans une plage allant de 0.5 et 10mm et préférablement allant de 1 à 2mm. La poudre Mp1 est typiquement un alliage de métal par exemple du Titane grad5 Ta6V. L'étape de pré-compactage vise à transformer la poudre libre en une forme solide et cohérente appelée pièce verte, tout en conservant une porosité suffisante pour permettre le frittage.

Un liant organique peut être ajouté à la poudre avant cette étape pour améliorer la cohésion entre les particules pour une opération de frittage conventionnelle. Pour une opération de frittage de type SPS, l'ajout d'un liant n'est pas nécessaire puisque la chauffe rapide, combinée à une pression appliquée de manière simultanée, selon le procédé SPS, favorise une densification directe des particules.

La poudre Mp2 utilisée préalablement pour la fabrication d'une ou plusieurs préformes P est de nature différente de la poudre Mp1 du matériau principal M1. La poudre Mp2 peut par exemple être composée d'un mélange d'une première poudre à base de métal et d'une seconde poudre à base d'un matériau coloré ou d'un matériau luminescent, de préférence réagissant aux UV, soit par fluorescence soit par phosphorescence pour permettre par exemple l'authentification du composant horloger.

Dans une forme de réalisation, la poudre Mp1 du matériau principal M1 du composant horloger 100, pris en exemple dans les figures annexées, peut être utilisée en tant que première poudre du mélange constituant la poudre Mp2 du matériau secondaire M2 tandis que le matériau coloré de ce mélange peut par exemple être une céramique ou un aluminosilicate de strontium dopé à l'europium choisi pour ses propriétés fluorescentes principalement dans les régions rouge et bleue du spectre lumineux. Selon cette forme de réalisation, la proportion du matériau coloré de ce mélange se situe de préférence entre 5 % et 99 % en volume du la poudre Mp1 du matériau principal avec une préférence pour une teneur comprise entre 75 % et 95 %.

Selon la composition de la préforme ou de chacune des préformes P obtenues à l'étape S1, celle-ci peut être suivie d'une étape au moins partielle de déliantage chimique, en immergeant la préforme ou chacune des préformes P réalisées à l'étape S1 dans de l'acétone par exemple. Cette étape peut en outre être suivie par une étape optionnelle de déliantage thermique sous atmosphère contrôlée pour éviter l'oxydation du ou des matériaux métalliques. L'objectif de ces deux étapes est de réduire autant que possible la part de liant tout en conservant une tenue mécanique suffisante de la préforme pour pouvoir au moins la manipuler délicatement. La part de liant résiduelle peut être comprise entre 0 et 10% en masse, préférablement entre 0 et 5%.

Selon une troisième étape S3 du procédé, plusieurs préformes P d'un motif tridimensionnelle identique ou différent sont disposées dans le moule M sur la première couche C, pré-compactée. L'emplacement de chaque préforme les unes par rapport aux autres dans le moule M est dicté par l'aspect visuel souhaité du composant horloger final 100.

Une seconde couche C₂ de poudre Mp1 du matériau principal est ensuite disposée dans le moule M, selon l'étape S4, de manière à ce que les préformes P soient intégralement noyées dans la poudre Mp1. Le moule est ainsi rempli par la poudre Mp1 afin d'entourer les préformes P et de les recouvrir complètement par une surépaisseur comprise dans une plage allant de 0.5 à 10mm, préférablement de 2 à 5mm après pré-compactage de la poudre.

Quand bien même la ou les préformes seront révélées par la suite lors d'une opération d'enlèvement de matière après le frittage, le fait de dissimuler complètement ces préformes sous une telle surépaisseur de poudre permet de simplifier grandement le procédé de réalisation du composant horloger ou de bijouterie, notamment en s'affranchissant des contraintes liées au retrait de la matière ou à la précision du positionnement des préformes, en particulier relativement à la surface de laquelle elles doivent être révélées au sein du composant. Ces contraintes peuvent typiquement devenir très difficiles à maîtriser si l'on souhaite par exemple que les préformes épousent parfaitement la surface extérieure du composant dans sa forme finale.

Un cycle de frittage, de préférence de type SPS, est ensuite réalisé, selon l'étape S5. Ce cycle de frittage comprend, pour la fabrication d'une carrure 100, typiquement les paramètres suivants pour un matériau céramique :
- profil de montée en température situé entre 20°C/min et 200°C/min, de préférence entre 20°C/min et 150°C/min, jusqu'à une température cible typiquement entre 600°C et 1550°C, de préférence entre 900°C et 1380°C ;
- maintien de la température cible entre 1 et 20min, de préférence entre 1 et 10 min ;
- profil de descente en température situé entre 25°C à 100 °C/min après la phase de frittage ;
- pression de frittage comprise entre 0MPa et 100 MPa, de préférence entre 10 MPa et 90 MPa ;
- courants entre 2'000 et 20'000 Ampères, de préférence entre 3'000 à 4'000 Ampères ;
- tension entre 2 et 10 Volts, de préférence entre 5 et 10 Volts.

La pastille de matière frittée est ensuite retirée du moule M et au moins une opération d'enlèvement de matière, selon l'étape S6, est réalisée sur la pastille frittée pour révéler en surface du composant une partie S des éléments tridimensionnels constitués du matériau secondaire M2 alors que le reste de ces éléments demeurent intégrés dans la masse du composant horloger 100 constitué, au moins de manière prépondérante, du matériau principal M1.

Ladite au moins une opération d'enlèvement de matière est typiquement une opération d'usinage au sens large du terme, à savoir qu'elle pourrait être entreprise non seulement par une machine-outil mais pourrait également être mise en oeuvre par abrasion, par découpe au jet d'eau ou par laser, ou encore par n'importe quel autre moyen permettant de révéler en surface du composant une partie de l'élément tridimensionnel constituée du matériau secondaire. Dans une forme de réalisation, l'opération ou les opérations d'enlèvement de matière précitées visent également à obtenir au moins une des dimensions finales du composant d'horlogerie ou de bijouterie.

Par exemple, au cours de l'étape S6, la pastille de matière frittée peut tout d'abord être découpée par jet d'eau ou par laser afin d'obtenir une ébauche s'apparentant à la forme de la pièce aux dimensions finales suivie d'une opération d'usinage pouvant typiquement être une opération de fraisage pour obtenir les dimensions exactes du composant horloger 100. Une opération de décoration peut ensuite être réalisée sur le composant horloger. Cette opération consiste à réaliser sur une ou plusieurs régions du composant horloger 100 au niveau de la surface de la pièce, en particulier sur le flanc de la carrure, une décoration par une opération mécanique. L'opération mécanique peut être notamment un polissage, un sablage, un satinage du type rectiligne, circulaire ou colimaçon, un microbillage, un guillochage, un perlage, une finition en côtes de Genève ou une gravure main.

Le composant horloger 100 ainsi obtenu est constitué d'un matériau principal, par exemple en titane, pouvant révéler sous UV ou dans le noir les motifs du matériau secondaire révélés à la surface du composant. Le composant horloger obtenu selon le procédé susvisé est particulièrement bien adapté pour une carrure de montre 100 mais pourrait tout aussi bien être utilisé pour l'obtention d'un autre composant d'habillage tel qu'une lunette ou un fond d'une boite de montre.

Différentes compositions de poudre Mp1, Mp2 peuvent être utilisées pour la fabrication d'un composant horloger 100 selon un procédé similaire à celui qui vient être décrit afin que ce composant comprenne un matériau principal M1 et secondaire M2 de différente nature.

A titre d'exemple et toujours en référence à la figure 1, les poudre Mp1, Mp2 du matériau principal M1 et secondaire M2 peuvent être chacune une poudre de céramique, par exemple de nature ZTA. Ces deux poudres de céramique Mp1, Mp2 peuvent être choisies de sorte que la différence de couleur entre le matériau principal M1 et le matériau secondaire M2, après l'opération de frittage S5, soit supérieure à un Delta E de 1 selon la norme CIEDE2000, de préférence supérieure à un Delta de 2 ou de 3, afin d'avoir une distinction visuelle nette et perceptible entre les matériaux principal et secondaire M1, M2 du composant horloger 100.

Pour la fabrication d'une lunette de montre avec les deux poudres de céramique Mp1, Mp2 susvisées, une première couche C, de la poudre de céramique Mp1 est disposée, conformément à l'étape S2, dans le fond d'un moule M d'un diamètre de l'ordre de 50mm jusqu'à obtenir une épaisseur comprise dans une plage allant de 0.5 et 10mm, préférablement allant de 1 à 4mm, après avoir été pré-compactée. Conformément à l'étape S4, une seconde couche C₂ de la poudre de céramique Mp1 est déposée de manière à entourer les préformes jusqu'à recouvrir complètement celles-ci, avec une surépaisseur comprise dans une plage allant de 0.5 à 10mm, préférablement de 1 à 5mm après pré-compactage de la poudre.

Le cycle de frittage SPS réalisé à l'étape S5 comprend, pour la fabrication d'une lunette, notamment les paramètres suivants :
- profil de montée en température situé entre 20°C/min et 200°C/min, de préférence entre 20°C/min et 150°C/min, jusqu'à une température cible typiquement entre 600°C et 1'550°C, de préférence entre 1'200°C et 1'550°C ;
- maintien de la température cible entre 1 et 20 min, de préférence entre 2 et 15 min ;
- profil de descente en température situé entre 25°C à 100 °C/min après la phase de frittage ;
- pression de frittage comprise entre 0 MPa et 100 Mpa, de préférence entre 10 MPa et 90 MPa ;
- courants entre 2'000 et 20'000 Ampères, de préférence entre 3'000 à 4'000 Ampères ;
- tension entre 2 et 10 Volts, de préférence entre 5 et 10 Volts.

Selon une autre forme de réalisation, les poudres Mp1, Mp2 du matériau principal M1 et secondaire M2 du composant horloger 100, notamment d'un composant d'habillage tel qu'une carrure de montre, une lunette ou un fond d'une boite de montre, sont chacune des poudres de métal précieux, de préférence à base d'or ou d'alliage d'or. Les paramètres du cycle de frittage selon l'étape S5 sont adaptés en conséquence.

Selon une autre forme de réalisation, les poudres Mp1, Mp2 du matériau principal M1 et du matériau secondaire M2 du composant horloger 100 sont des poudres homogènes comprenant chacune de la poudre de céramique et de la poudre d'un métal ou d'un alliage métallique.

La poudre de métal ou d'alliage métallique du matériau principal M1 ainsi que du matériau secondaire M2 est une poudre de métal précieux, de préférence à base d'or ou d'alliage d'or.

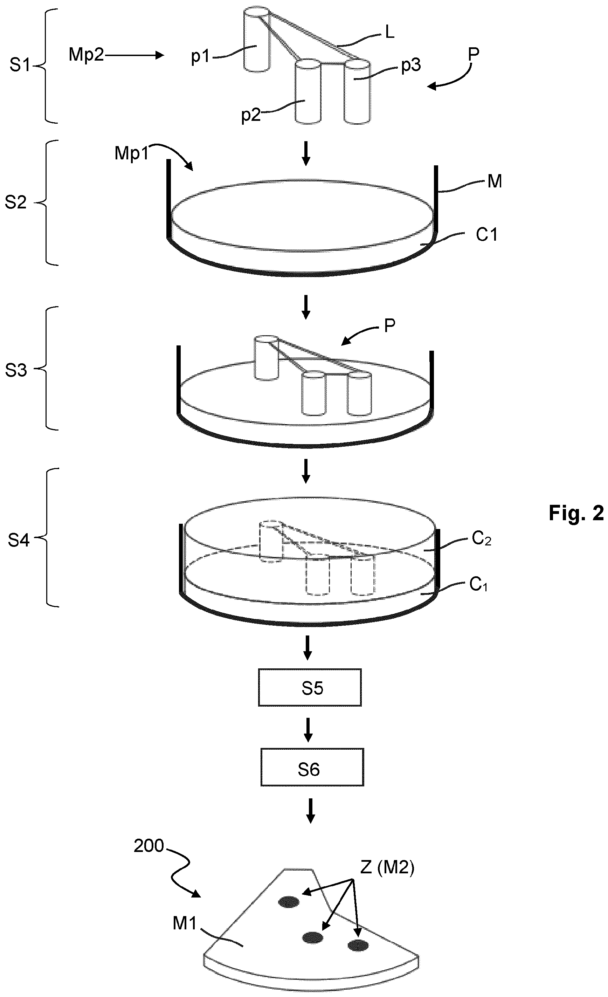

Selon une autre forme de réalisation et en référence à la figure 2, le procédé consiste à un obtenir un composant horloger 200, notamment une platine ou un pont d'un mouvement horloger, comprenant un matériau principal M1 et un matériau secondaire M2 possédant au moins une propriété fonctionnelle prépondérante par rapport aux propriétés du matériau principal.

Une platine ou un pont 200 peut par exemple être fabriqué en céramique et comporter des zones constituées d'une autre matière dont le module de Young permet une déformation de cette matière pour le chassage de coussinets, notamment de paliers en rubis, tout en évitant de fragiliser la zone environnante en céramique. La platine peut ainsi être réalisée principalement en céramique à l'exception de ces zones adaptées pour recevoir, par l'intermédiaire de paliers, des pivots de mobiles d'un mouvement horloger.

La première étape S1 consiste ainsi à réaliser une préforme P du motif tridimensionnel, de préférence par fabrication additive selon la description susvisée, à partir d'une poudre Mp2 du matériau secondaire M2 constituant en partie la platine ou le pont 200. La poudre Mp2 est de type métallique et est préférablement un alliage permettant de chasser des coussinets ou paliers. Un tel alliage pourrait typiquement être du maillechort ou du laiton, voire un matériau noble présentant une ductilité nécessaire pour permettre une telle opération.

La préforme P comporte par exemple une structure dotée de plusieurs éléments ou plots p1, p2, p3 maintenus à distance par des éléments de liaison L afin de positionner les plots les uns par rapport aux autres. Cette étape peut également être suivie d'une étape au moins partielle de déliantage chimique, et une étape de déliantage thermique afin que la part de liant résiduelle soit comprise dans une plage allant de 0 à 10% en masse, préférablement de 0 à 3%.

Une première couche C, de poudre de céramique Mp1, par exemple de nature ZTA, est disposée dans le fond du moule M, typiquement d'un diamètre de 36mm, à l'étape S2 de sorte à avoir une épaisseur, après avoir été pré-compactée, comprise dans une plage allant de 0.5 et 10mm et préférablement allant de 1 à 2mm. La seconde couche C₂ de la poudre de céramique Mp1 est déposée à l'étape S4 afin d'entourer la structure P jusqu'à recouvrir complètement celle-ci, avec une surépaisseur comprise dans une plage allant de 0.5 à 10mm, préférablement de 1 à 2mm après pré-compactage de la poudre.

Le cycle de frittage, de préférence de type SPS, réalisé à l'étape S5 comprend, pour la fabrication d'une platine, notamment les paramètres suivants :
- profil de montée en température situé entre 20°C/min et 200°C/min, de préférence entre 20°C/min et 150°C/min jusqu'à une température cible typiquement entre 600°C et 1'500°C, de préférence entre 800°C et 1'100°C ;
- maintien de la température cible entre 1 et 20 min, de préférence entre 1 et 5 min ;
- profil de descente en température situé entre 25°C à 100 °C/min après la phase de frittage ;
- pression de frittage comprise entre 0 MPa et 100 MPa, de préférence entre 10 MPa et 60 MPa ;
- courants entre 2'000 à 20'000 Ampères, de préférence entre 3'000 à 4'000 Ampères ;
- tension entre 2 et 10 Volts, de préférence entre 5 et 10 Volts.

Au cours de l'étape S6, la pastille de matière frittée peut tout d'abord être découpée par jet d'eau ou par laser afin d'obtenir une ébauche s'apparentant à la forme de la pièce aux dimensions finales suivie d'une opération de fraisage pour obtenir par exemple les dimensions exactes de la platine ou du pont 200. L'opération de fraisage permet de révéler les zones Z, pouvant typiquement être de forme circulaire, constituées du matériau secondaire M2. Ce matériau secondaire pourrait être du maillechort, du laiton ou tout autre matériau suffisamment malléable ou ductile, pour y réaliser la fixation des coussinets ou paliers.

De manière optionnelle, une opération de décoration peut être ensuite réalisée sur la platine ou le pont 200. Cette opération pourrait consister à réaliser, au niveau de la surface de la platine ou du pont, un ornement par une opération mécanique. L'opération mécanique peut être notamment un polissage, un sablage, un satinage du type rectiligne, circulaire ou colimaçon, un microbillage, un guillochage, un perlage, une finition côte de Genève ou une gravure main.

Bien que le procédé qui vient d'être décrit se rapporte essentiellement à la fabrication d'un composant horloger, on comprendra qu'il pourrait être appliqué ou adapté sans difficulté par un homme du métier à la fabrication d'un composant de bijouterie, par exemple un article de joaillerie, sans sortir du cadre de la présente invention définie par les revendications annexées.

## Revendications

1. Procédé de fabrication d'un composant horloger ou de bijouterie fini ou semi-fini (100 ; 200), comprenant un matériau principal (M1) et un matériau secondaire différent (M2) noyé dans le matériau principal (M1) et en partie localisé en surface dudit composant (100; 200), le procédé comportant les étapes suivantes :
i) placer dans un moule (M) une poudre (Mp1) du matériau principal (M1) et au moins une préforme (P) d'un élément tridimensionnel préalablement réalisée à partir d'une poudre (Mp2) du matériau secondaire (M2) de sorte à ce que ladite au moins une préforme (P) soit intégralement noyée au sein de la poudre du matériau principal (M1) ;
ii) réaliser une opération de frittage de la matière contenue dans le moule (M) afin d'obtenir une pastille frittée sans qu'aucun du matériau principal (M1) et du matériau secondaire (M2) n'entre en fusion, et
iii) réaliser au moins une opération d'enlèvement de matière sur la pastille frittée de sorte à révéler en surface du composant (100 ; 200) une partie (S) de l'élément tridimensionnel constituée du matériau secondaire (M2), le reste dudit élément tridimensionnel étant intégré dans la masse dudit composant (100 ; 200) constitué du matériau principal (M1).

2. Procédé de fabrication selon la revendication 1, dans lequel la partie (S) de l'élément tridimensionnel, située en surface du composant (100; 200), épouse le profil de la surface environnante dudit composant constitué du matériau principal (M1).

3. Procédé de fabrication selon la revendication 1 ou 2, dans lequel ladite partie (S) de l'élément tridimensionnel, située en surface dudit composant (100 ; 200), représente une figure géométrique, un logo ou tout autre forme contrôlée.

4. Procédé de fabrication selon l'une des revendications précédentes, dans lequel ladite au moins une préforme (P) est réalisée par un procédé de fabrication additive.

5. Procédé de fabrication selon la revendication précédente, dans lequel ledit procédé de fabrication additive est un procédé d'impression 3D par stéréolithographie (SLA) ou par filament (Fused Déposition Modeling), le filament comportant la poudre (Mp2) du matériau secondaire (M2) et un liant organique comprenant au moins un composé thermoplastique.

6. Procédé de fabrication selon la revendication précédente, dans lequel une étape de déliantage, au moins partielle, de la préforme (P) est réalisée avant l'étape i).

7. Procédé de fabrication selon l'une des revendications précédentes, dans lequel l'étape i) consiste à
disposer dans le moule (M) une première couche (C₁) de la poudre (Mp1) du matériau principal (M1) avec une épaisseur comprise entre 0.5 et 10mm, de préférence comprise entre 1 et 4mm,
placer ladite au moins une préforme (P) du motif tridimensionnel sur la première couche (C₁), et
disposer une seconde couche (C₂) de la poudre (Mp1) du matériau principal (M1) avec une épaisseur comprise entre 0.5 et 10mm, de préférence comprise entre 1 et 5mm, afin d'entourer et de recouvrir intégralement la préforme (P) par le matériau principal.

8. Procédé de fabrication selon l'une des revendications précédentes, dans lequel le matériau secondaire (M2) présente un aspect visuel qui se confond avec celui du matériau principal (M1) dans des conditions normales d'éclairage et un aspect visuel distinct de celui du matériau principal (M1) dans le noir ou sous un rayonnement ultraviolet.

9. Procédé de fabrication selon l'une des revendications précédentes, dans lequel la poudre (Mp2) du matériau secondaire (M2) est un mélange d'au moins un métal et d'au moins un matériau luminescent.

10. Procédé de fabrication selon l'une des revendications 1 à 8, dans lequel les poudres (Mp1, Mp2) du matériau principal (M1) et secondaire (M2) comprennent chacune au moins un matériau ou une combinaison de matériaux parmi les matériaux céramiques et les matériaux métalliques de préférence précieux tels que ceux comprenant de l'or.

11. Procédé de fabrication selon l'une des revendications précédentes, dans lequel les poudres sont choisies de sorte que la différence de couleur entre le matériau principal et le matériau secondaire soit supérieure à un Delta E de 1 selon la norme CIEDE2000, de préférence supérieure à un Delta E de 2 ou de 3, afin d'avoir une distinction visuelle nette et perceptible entre les matériaux principal et secondaire.

12. Procédé de fabrication selon l'une des revendications précédentes, dans lequel la préforme (P) du motif tridimensionnel est une structure comprenant des éléments distants (p1, p2, p3) les uns par rapport aux autres, le matériau secondaire (M2) possédant au moins une propriété fonctionnelle prépondérante par rapport aux propriétés du matériau principal (M1), de préférence le matériau secondaire (M2) possédant un module de Young inférieur au module de Young du matériau principal (M1).

13. Composant horloger ou de bijouterie fini ou semi-fini (100, 200) obtenu par le procédé selon l'une des revendications précédentes.

14. Composant horloger fini ou semi-fini (100, 200), notamment une platine ou un pont, obtenu par le procédé selon la revendication 12, dans lequel le matériau secondaire (M2) défini au moins en partie des zones (Z) configurées pour la fixation de pivots.

15. Pièce d'horlogerie comportant un ou plusieurs composants selon au moins l'une des revendications 13 et 14.
